# EUROPEAN PATENT APPLICATION

(11) **EP 4 336 719 A1**
(43) Date of publication of application: **13.03.2024**
(21) Application number: 22837389.0
(22) Date of filing: 08.06.2022
(51) Int. Cl.: H02M 3/00, G06F 1/28, H02J 1/00

(54) **POWER SUPPLY CONTROL METHOD AND POWER SUPPLY CONTROL DEVICE**

(30) Priority: 09.07.2021 JP 2021113951
(71) Applicant: Japan Aviation Electronics Industry, Limited, Tokyo 150-0043 (JP)
(72) Inventor: FUNATO, Ryo, Tokyo 150-0043 (JP)
(74) Representative: Prüfer & Partner mbB Patentanwälte · Rechtsanwälte
(86) International application number: PCT/JP2022/023177
(87) International publication number: WO 2023/281970

(57) **Abstract**

This method for controlling supply of power from a power source to a terminal device comprises: a monitoring step for monitoring voltage inputted from the power source, and determining a maximum suppliable power on the basis of a predetermined input-output relationship that has been set in advance; and a control step for executing control so as to supply to the terminal device an output power equal to or lower than the maximum suppliable power. In the input-output relationship, first to N-th input voltage ranges IR1-IRN are set as input voltage ranges in an ascending order, and first to N-th output power values OP1-OPN are set as discrete values respectively corresponding to the first to N-th input voltage ranges in an ascending order. In the monitoring step, one of the output power values corresponding to the input voltage range to which an input voltage from the power source belongs is determined as the maximum suppliable power value.

## Description

### Technical Field

This invention relates to a method for controlling supply of power from a power source to a terminal device and to a power supply device.

### Background Art

Patent Document 1 discloses an example of a power supply device compliant with USB (Universal Serial Bus) standards. The power supply device is an on-vehicle power supply device.

As shown in Fig. 4, a power supply device 90 disclosed in Patent Document 1 is provided with an on-vehicle device 92 and an open-to-user portion 94. The on-vehicle device 92 and the open-to-user portion 94 are connected to each other with a cable 96. The on-vehicle device 92 is connected to an on-vehicle battery as an input power source which supplies power to a terminal device connected to the open-to-user portion 94. The open-to-user portion 94 is provided with a USB connector as a connection interface for the terminal device.

### Prior Art Documents

### Patent Document(s)

Patent Document 1: JPA2020-10428

### Summary of Invention

### Technical Problem

For instance, there is a case where voltage of an on-vehicle battery decreases owing to load fluctuations depending on running condition of a vehicle, and thereby an input current flowing into a power supply device increases. Thus, an increase of the input current flowing into the power supply device may cause various problems. For example, the increase of the input current flowing into the power supply device may accelerate exhaustion of the battery and damages power supply routes from the battery to the power supply device. Moreover, depending on a voltage converter included in the power supply device, the increase of the input current to the power supply device may cause excessive heat generation. Additionally, the problems of the damage on the power supply routes and the excessive heat generation caused by the increase of the input current are not limited in the case where the input power source is the buttery.

It is therefore an object to provide a power supply control method which can suppress an undesirable increase of an input current to a power supply device. Moreover, it is an object to provide a power supply device which carries on control based on the power supply control method.

### Solution to Problem

One aspect of the present invention provides a first method for controlling supply of power from a power source to a terminal device, the method comprising:
a monitoring step monitoring input voltage from the power source to decide a maximum suppliable power value, which is suppliable to the terminal device, based on a predetermined input-output relationship set in advance, wherein: in the predetermined input-output relationship, first to Nth input voltage ranges are defined in ascending order as input voltage ranges while first to Nth output power values having discrete values are defined in ascending order as output power values, where N is an integer equal to or larger than 2, and the first to Nth output power values are respectively made to correspond to the first to the Nth input voltage ranges; and the output value corresponding to the input voltage range to which the input voltage from the power source belongs is set as the maximum suppliable power value; and
a control step controlling output power to supply the output power equal to or smaller than the maximum suppliable power value to the terminal device.

Moreover, another aspect of the present invention provides a first power supply device, the power supply device comprising:
a voltage converter which converts input voltage from a power source to supply voltage based on a control signal;
a power source voltage monitor which monitors the input voltage from the power source to decide a maximum suppliable power value, which is suppliable to the terminal device, based on a predetermined input-output relationship set in advance, wherein: in the predetermined input-output relationship, first to Nth input voltage ranges are defined in ascending order as input voltage ranges while first to Nth output power values having discrete values are defined in ascending order as output power values, where N is an integer and equal to or larger than 2, and the first to the Nth input voltage ranges are respectively made to correspond to the first to Nth output power values; and the output power value corresponding to the input voltage range to which the input voltage from the power source belongs is set as the maximum suppliable power value; and
a PD (power delivery) controller which controls the voltage converter so that the supply voltage corresponds to a power value equal to or smaller than the maximum suppliable power value.

Here, the PD controller covers the whole of ICs (integrated circuits) and may be an all-purpose micro-computer, for example.

### Advantageous Effects of Invention

Even if the same power supply would be tried as that before the input voltage decreases while the input voltage from the power source decreases, the current flowing into the power supply device increases. In contrast, according to the present invention, monitoring the input voltage from the power source is carried out to reduce the power supplied to the terminal device when the input voltage decreases, so that undesirable increase of the input current can be suppressed.

In addition, fixed output power values are made to correspond to the input voltage ranges, respectively, so that a part for generating output voltage in response to the input voltage can be realized by a simple structure, such as a register in which corresponding relationships are set in advance.

An appreciation of the objectives of the present invention and a more complete understanding of its structure may be had by studying the following description of the preferred embodiment and by referring to the accompanying drawings.

### Brief Description of Drawings

Fig. 1 is a schematic view showing a power supply system according to an embodiment of the present invention.
Fig. 2 is a view which is used for describing a power supply control method according to the embodiment of the present invention.
Fig. 3 is a schematic view showing a modified example of a power supply device shown in Fig. 1.
Fig. 4 is a schematic view showing a power supply device disclosed in Patent Document 1.

### Description of Embodiments

While the invention may be realized in various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

A method for controlling supply of power from a power source to a terminal device according to an embodiment of the present invention is provided with a monitoring step monitoring input voltage from the power source to decide a maximum suppliable power and a control step controlling output power to supply the output power equal to or smaller than the maximum suppliable power to the terminal device.

In detail, decision of the maximum suppliable power in the monitoring step is carried out based on prescribed input-output relationship set in advance. In the predetermined input-output relationship, first to Nth input voltage ranges are defined in ascending order as input voltage ranges while first to Nth output power values having discrete values are defined in ascending order as output power values, where N is an integer and equal to or larger than 2. Moreover, the first to the Nth output power values are respectively made to correspond to the first to the Nth input power ranges. In accordance with the prescribed input-output relationship, in the monitoring step, an output power value corresponding to the input voltage range to which the input voltage from the power source belongs is decided as a maximum suppliable power value. If this is done, when the input voltage decreases, the maximum suppliable power itself decreases and the output power supplied to the terminal device decreases. Accordingly, undesirable increase in the input current can be avoided.

Here, in the controlling step, when the input voltage is larger than the Nth input voltage range, control is carried out so that the output power smaller than the Nth output power value is supplied to the terminal device. According to this, when the power source is a battery or the like, the battery can be protected from an overvoltage state.

The aforementioned power supply control method may be provided with an obtaining step obtaining terminal information including a request power value which is a maximum power value requested by the terminal device, from the terminal device. In that case, in the controlling step, the control is carried out so that the output power for the terminal device is equal to or smaller than the maximum suppliable power value and the request power value. Thus, power supply control can be carried out in response to the terminal device.

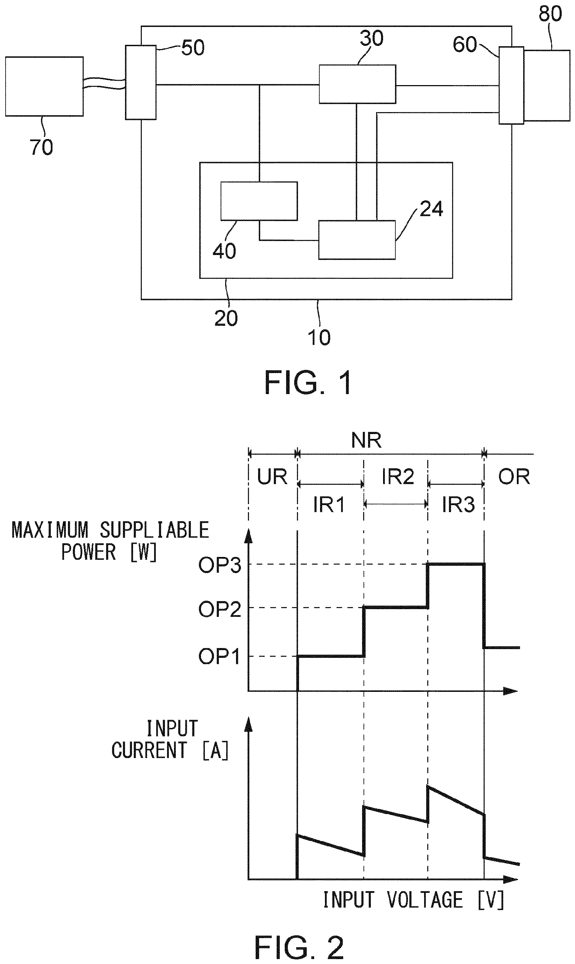

Referring to Fig. 1, a power supply system according to the embodiment of the present invention is provided with a power supply device 10 which carries out power supply control based on the aforementioned power supply control method according to the embodiment of the present invention, a battery 70 as a power source and a terminal device 80.

Specifically, the power supply device 10 is provided with a PD (power delivery) controller 20, a voltage converter 30, a power supply connector 50 and a USB connector 60. The power supply connector 50 is connected to the battery 70 as the power source. The USB connector 60 is used as a connection interface for the terminal device 80. When the terminal device 80 is connected to the USB connector 60, the power supply device 10 controls and carried out power supply from the battery 70 as the power source to the terminal device 80. Additionally, the power source is not limited to the battery 70. It should be something which can supply voltage to the power supply device 10 and its components do not matter.

The voltage converter 30 is connected to the power supply connector 50 and the USB connector 60. The voltage converter 30 of the present embodiment is a DC/DC converter. Moreover, the voltage converter 30 is connected to the PD controller 20 and, as described later, converts input voltage from the battery 70 to supply voltage for the terminal device 80, based on a control signal produced by the PD controller 20.

The PD controller 20 of the present embodiment is provided with a power supply voltage monitor 40 and a control portion 24. The power supply voltage monitor 40 is connected to a line connecting between the power supply connector 50 and the voltage converter 30, and the control portion 24 is connected to the power supply voltage monitor 40, the USB connector 60 and the voltage converter 30.

The power supply voltage monitor 40 monitors the input voltage from the battery 70 to decide a maximum suppliable voltage value, which is suppliable for the terminal device 80, based on predetermined input-output relationship set in advance. Specifically, in the predetermined input-output relationship, first to Nth input voltage ranges are defined in ascending order as input voltage ranges while first to Nth output power values having discrete values are defined in ascending order as output power values, where N is an integer and equal to or larger than 2. Moreover, the first to the Nth output power voltages are respectively made to correspond to the first to the Nth input voltage ranges. The power supply voltage monitor 40 decides, as the maximum suppliable power value, the output power value corresponding to the input voltage range to which the input voltage from the battery 70 belongs and informs the control portion 24.

Further referring to Fig. 2, in the present embodiment, a range of the input voltage is broadly divided into three regions: a normal operation range NR; an under range UR in which voltage is lower than the normal operation range NR; and an over range OR in which voltage is higher than the normal operation range NR. Among them, the normal operation range NR is a range, at which the aforementioned predetermined input-output relationship is aimed, and divided into first to third input voltage ranges IR1 to IR3 in ascending order. On the other hand, as output voltage values, first to third output voltage values OP1 to OP3 having discrete values are defined in ascending order and made to correspond to the first to the third input voltage ranges IR1 to IR3, respectively.

The power supply voltage monitor 40 monitors voltage input from the battery 70 to the voltage converter 30 and sets the first output power value OP1 as the maximum suppliable power value suppliable for the terminal device 80 when the input voltage value belongs to the first input voltage range IR1. In a similar manner, the power supply voltage monitor 40 sets the second output power value OP2 as the maximum suppliable power value suppliable for the terminal device 80 when the input voltage value belongs to the second input voltage range IR2 and sets the third output power value OP3 as the maximum suppliable power value suppliable for the terminal device 80 when the input voltage value belongs to the third input voltage range IR3.

In addition, the power supply voltage monitor 40 of the present embodiment sets the maximum suppliable power to 0 W when the input voltage from the battery 70 belongs to the under range UR lower than the normal operation range NR. On the other hand, the power supply voltage monitor 40 of the present embodiment sets the maximum suppliable power to a voltage value lower than the third output power value OP3, which is the highest, when the input voltage from the battery 70 belongs to the over range OR higher than the normal operation range NR or when the input voltage is overvoltage. The voltage value decided by the power supply voltage monitor 40 at this time is also a constant value. In the present embodiment, the input voltage ranges are respectively made to correspond to the constant power values as just described, so that the power supply voltage monitor 40 which decides the maximum suppliable power in response to the input voltage can be realized by a simple structure, such as a register.

The control portion 24 of the PD controller 20 generates a control signal and outputs it to the voltage converter 30 so that power equal to or smaller than the maximum suppliable power decided by the power supply voltage monitor 40 is supplied to the terminal device 80. The voltage converter 30 receives the control signal to convert the input voltage to a suitable supply voltage and supplies it to the terminal device 80. As just described, the control portion 24 of the PD controller 20 generates the control signal and controls the voltage converter 30 so that the voltage supplied from the voltage converter 30 to the terminal device 80 corresponds to the power value equal to or smaller than the maximum suppliable power.

For example, it is supposed that the input voltage belongs to the third input voltage range IR3 at first while power corresponding to the output power valuer OP3 is supplied to a certain terminal device 80. When the supplying of the power corresponding to the output power value OP3 to the terminal device 80 is continuously carried out without any control of the power even if the input voltage decreases thereafter and belongs to the first input voltage range IR1, an input current for the power supply device 10, specifically for the voltage converter 30, is excessively increased. In contrast, according to the present embodiment, in the case where the input voltage decreases and belongs to the first input voltage range IR1, the maximum suppliable power is reduced to the first output power value OP1. That is, the power actually supplied to the terminal device 80 is power equal to or smaller than the first output power value OP1. Accordingly, it can be avoided that the input current for the power supply device 10, specifically for the voltage converter 30, is increased to an undesirable value.

In particular, the control portion 24 of the PD controller 20 of the present embodiment is compliant with USB standards. Specifically, the control portion 24 of the PD controller 20 is also connected to the USB connector 60 and obtains terminal information including a request power value, which is the maximum power value requested by the terminal device 80, from the terminal device 80. Accordingly, the control portion 24 can decide supply power for the terminal device 80 in consideration of not only the maximum suppliable power decided by the power supply voltage monitor 40 but also the request power value when it generates the control signal for the voltage converter 30. For example, even if the maximum suppliable power decided based on the input voltage is the third output power value OP3, the control portion 24 of the present embodiment sets the supply power for the terminal device 80 to power corresponding to the second output power value OP2 when the power requested by the terminal device 80 is power corresponding to the second output power value OP2. Accordingly, appropriate supply power control corresponding to the terminal device 80 can be carried out.

As mentioned above, the power supply voltage monitor 40 of the present embodiment sets the maximum suppliable power to 0 W when the input voltage from the battery 70 belongs to the under range UR lower than the normal operation range NR. That is, because of the control of the control portion 24, the power supplied to the terminal device 80 turns off and the input current to the power supply device 10 becomes zero. In this way, the present embodiment prevents occurrence of a problem that the input current is accessibly increased in the lowest range to which the input voltage belongs, so that the power supply device 10 is protected.

In addition, as mentioned above, the power supply voltage monitor 40 of the present embodiment sets the maximum suppliable power to a power value lower than the third output power value OP3 when the input voltage is excess voltage. As shown in Fig. 2, in the present embodiment, the maximum suppliable power corresponding to the over range OR is set to a value which is larger than the first output power value OP1 and smaller than the second output value OP2. Attempt to continuously supply large power to the terminal device 80 in spite of a state that the input voltage is the excess voltage may damage the battery 70. On the other hand, there is a demand to supply minimum power and continue to charge the terminal device 80, for example. In the present embodiment, the power value which copes with both of them is set as the maximum suppliable power for the excess voltage.

According to the power supply device 10 mentioned above, a possibility of occurrence of a problem due to excessive increasing of the input current can be avoided even if the input voltage from the power source decreases. Thus, for example, protection of the battery 70 as the power source and protection of a route from the battery 70 to the voltage converter 30 through the power supply connector 50 can be made. Moreover, in a case where the voltage converter 30 is capable of generating heat in response to increase of the input current, heat generation of the voltage converter 30 can be prevented. However, this does not mean that the voltage converter 30 only covers one capable of generating heat in response to increase of the input current.

Although the explanation about the power supply device 10 according to the present embodiment is made above referring to Fig. 1, the present invention is not limited thereto but susceptible of various modifications and alternative forms without departing from the spirit of the invention.

For example, the PD controller 20 and the control portion 24 thereof are compliant with USB standards in the aforementioned embodiment, but the present invention is not limited thereto. The PD controller 20 and the control portion 24 thereof are not limited to those which are compliant with USB standards. In that case, the control portion 24 of the PD controller 20 may not be connected to the USB connector 60.

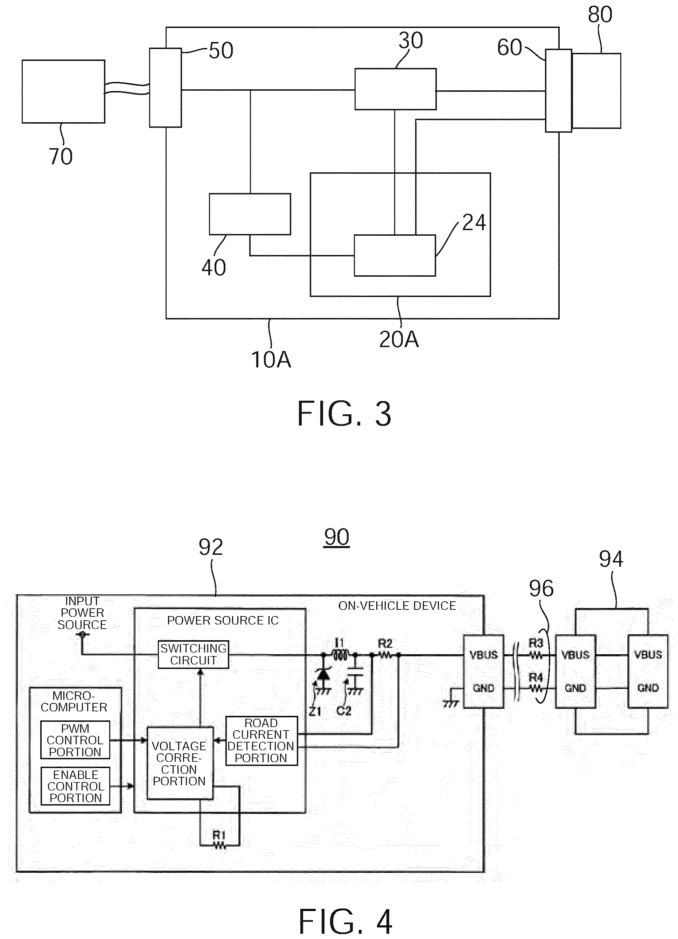

Moreover, the power supply voltage monitor 40 is provided in the PD controller 20 in the present embodiment, but the present invention is not limited thereto. For example, as a power supply device 10A shown in Fig. 3, the power supply voltage monitor 40 may be provided outside a PD controller 20A. Additionally, in Fig. 3, components same as the components shown in Fig. 2 are designated by the same reference numbers.

Furthermore, the control portion 24 of the PD controller 20 is provided with a function for obtaining the terminal information from the terminal device 80 in the aforementioned embodiment, but the function for obtaining the terminal information may be separated from the control portion 24 and provided as an independent component (a terminal information obtaining portion). In that case, the terminal information obtaining portion is connected to the USB connector 60 and obtains the terminal information from the terminal device 80 to inform the control portion 24 of it. The control portion 24 compares the request power value included in the terminal information obtained by the terminal information obtaining portion with the maximum suppliable power informed from the power supply voltage monitor 40 and controls the voltage converter 30 so that lower one of them is set as the supply power.

On the other hand, in a case of the power supply device 10 for a use in which the request power value of the terminal device 80 is constant, the control portion 24 of the PD controller 20 may not have the function for obtaining the terminal information from the terminal device 80. In that case, the control portion 24 of the PD controller 20 may not be connected to the terminal device 80 through the USB connector 60.

The present invention is based on Japanese Patent Application No. JP2021-113951 filed July 9, 2021 before the JPO, the contents of which are incorporated herein in their entirety by reference.

While there has been described what is believed to be the preferred embodiment of the invention, those skilled in the art will recognize that other and further modifications may be made thereto without departing from the spirit of the invention, and it is intended to claim all such embodiments that fall within the true scope of the invention.

### Reference Signs List

- 10, 10A: power supply device
- 20, 20A: PD controller
- 24: control portion
- 30: voltage converter
- 40: power supply voltage monitor
- 50: power supply connector
- 60: USB connector
- 70: battery
- 80: terminal device

## Claims

1. A method for controlling supply of power from a power source to a terminal device, the method comprising:
a monitoring step monitoring input voltage from the power source to decide a maximum suppliable power value, which is suppliable to the terminal device, based on a predetermined input-output relationship set in advance, wherein: in the predetermined input-output relationship, first to Nth input voltage ranges are defined in ascending order as input voltage ranges while first to Nth output power values having discrete values are defined in ascending order as output power values, where N is an integer equal to or larger than 2, and the first to Nth output power values are respectively made to correspond to the first to the Nth input voltage ranges; and the output value corresponding to the input voltage range to which the input voltage from the power source belongs is set as the maximum suppliable power value; and
a control step controlling output power to supply the output power equal to or smaller than the maximum suppliable power value to the terminal device.

2. The method for controlling supply of power as recited in claim 1, wherein:
the method further comprises an obtaining step obtaining terminal information including a request power value, which is a maximum power value requested by the terminal device, from the terminal device; and
in the control step, the output power for the terminal device is controlled to be equal to or smaller than the maximum suppliable power value and the request power value.

3. The method for controlling supply of power as recited in claim 1 or 2, wherein:
when the input voltage from the power source is higher than the Nth input voltage range, the control step controls the output power to supply the output power smaller than the Nth output power value to the terminal device.

4. A power supply device comprising:
a voltage converter which converts input voltage from a power source to supply voltage based on a control signal;
a power source voltage monitor which monitors the input voltage from the power source to decide a maximum suppliable power value, which is suppliable to the terminal device, based on a predetermined input-output relationship set in advance, wherein: in the predetermined input-output relationship, first to Nth input voltage ranges are defined in ascending order as input voltage ranges while first to Nth output power values having discrete values are defined in ascending order as output power values, where N is an integer and equal to or larger than 2, and the first to the Nth input voltage ranges are respectively made to correspond to the first to Nth output power values; and the output power value corresponding to the input voltage range to which the input voltage from the power source belongs is set as the maximum suppliable power value; and
a PD (power delivery) controller which controls the voltage converter so that the supply voltage corresponds to a power value equal to or smaller than the maximum suppliable power value.

5. A power supply device as recited in claim 4, wherein the PD controller obtains terminal information including a request power value, which is a maximum power value requested by the terminal device, from the terminal device and controls the voltage converter so that the supply voltage corresponds to a voltage value equal to or smaller than the maximum suppliable power value and the request power value.

6. The power supply device as recited in claim 4 or 5, wherein the power source voltage monitor is provided in the PD controller.

7. The power supply device as recited in any one of claims 4 to 6, wherein the PD controller controls the voltage converter so that the supply voltage corresponds to a power value smaller than the Nth output power value when the input voltage from the power source is higher than the Nth input voltage range.

8. The power supply device as recited in any one of claims 4 to 7, wherein:
the power supply device further comprises a USB (universal serial bus) connector; and
the USB connector is connected to the PD controller and used as a connection interface for the terminal device.
